# EUROPEAN PATENT APPLICATION

(11) **EP 4 465 224 A1**
(43) Date of publication of application: **20.11.2024**
(21) Application number: 23020269.9
(22) Date of filing: 31.05.2023
(51) Int. Cl.: G06Q 10/30

(54) **INTELLIGENT SYSTEM FOR COLLECTION, LABELING AND MONITORING OF WASTE OR PRODUCTS AND RELATED METHOD, IMPLEMENTED ON SAID SYSTEM**

(30) Priority: 25.04.2023 RO 202300010 U
(71) Applicant: Honciuc, Vasile Bogdan, IASI; Jud. IASI (RO)
(72) Inventor: Honciuc, Vasile Bogdan, IASI; Jud. IASI (RO)
(74) Representative: Strenc, Alexandru Cristian

(57) **Abstract**

The invention, presents a technical solution for digitizing the entire waste management process that comprises collecting, labeling and monitoring waste or products, mainly used in the field of waste collection, but also as a solution for the efficiency of product sorting and storage operations.

The system consists of some modules A, B, C, D, E, for collecting waste or products, a central unit UC and respectively a server.

Each module A, B, C, D, E, etc. consists of a container (9), an access hatch (4), some electromagnetic bolts (13), a label application device (12), a weighing platform (7) of the container (9) and respectively some photovoltaic panels (10). The module consists of awaste storage packaging presence sensor (5), an access hatch door sensor (14), a sensor for measuring the degree of container filling, a module access door sensor (8) and, respectively, some system status signaling lamps (6).

The central unit (UC) is composed of a barcode reader (2) and an RFID card reader (3) for user identification, a PLC programmable logic controller, a GSM data transmission module (24), an HMI operating panel ( 25), a printer for issuing proof of receipt of thewaste storage packaging (1) and respectively a general panel (23).

The label application device (12) positioned in each module and controlled by the UC central unit, is made up of the label tape roll (16), label support tape (15), label printer (22) (if necessary because the labels can be pre-printed), the lack of labels detection sensor (21), the label unwinder (17), the part for detaching the labels from the tape (20), the tape stretching roller (19) and the tape wrapping roller without labels (18).

## Description

The system and its related method, according to the invention are mainly used in the field of collection of waste, inserted in waste storage packagings such as bags, boxes and the like, but also as a solution for efficienting the operations of waste or products sorting and storing.

In the field of waste collection, the system and related method, according to the invention are designed in such a way that by digitizing the entire waste management process, the rate of selective waste collection will increase and will bring benefits to both direct users and sanitation operators. Unlike the field of waste collection, in the field of product sorting and storage, the system streamlines the production and management process of the resulting products.

There are known solutions existing on the market on waste collection and monitoring that offer, as functionalities, access to the container where the waste is deposited, available data on user, type of waste entered and the volume of the container.

Disadvantage of these solutions is that they do not manage a series of other information of maximum utility in the development of a complex waste monitoring process that leads to an optimization of the decisions taken on the one hand, in connection with the behavior of the users and respectively with the collection of waste by the sanitation operator on the other hand. This information refers to the access to the container, the query of the database and the exchange of data in real time regarding the user, the amount of waste entered, the labeling of the bag entered and its association with the user, the volume of the container, the weight of the container presented in real time, the amount of waste taken by the sanitation operator at the time of emptying the container.

Are also known intelligent waste collection systems, which, for the purpose of traceability, are using the labeling of the premises where the waste is stored.

Thus, patent document CN112862035A presents a system and a method for achieving the classification and traceability of medical waste. The system comprises a smart medical waste collection box, a medical waste treatment station and a medical waste management system. The smart medical waste collection box comprises a box body, a barcode generator, a barcode identifier, a smart touch screen and a smart controller. The intelligent controller is electrically connected with the barcode generator, barcode recognition and intelligent touch screen.

In the patent document, CN113879724A, it is presented an intelligent garbage classification system based on crowdsourcing , which includes a human-computer interaction interface, a crowdsourcing module and a data management module. The crowdsourcing module comprises a crowdsourcing evaluation submodule and a crowdsourcing labeling submodule in which the crowdsourcing evaluation submodule is used to distribute tasks to the crowdsourcing evaluation staff in the form of distributing evaluation orders, performing manual evaluation of landfill classification, and issuing an identification result.

Disadvantage of the solutions in the two documents is that the problem of labeling is treated at the general level of the waste classification and traceability method without offering a concrete technical solution for the effective implementation of labeling in the work process.

Technical problem solved by the present invention consists in identifying the generator of the waste storage packaging, labeling the waste storage packaging, finding out the amount deposited by the user for each type of waste, monitoring it in the sorting/storage station.

Technical solution according to the invention allows access to the waste container and the origin of the waste storage packaging deposited at the module in the ecological island. Each deposited waste storage packagingwaste storage packaging is weighed and labeled individually with a unique barcode, the data being assigned to a unique user.

This information together with the state of the device is sent to the server from where it can be accessed to identify the origin of a certainwaste storage packaging with waste in case this action is necessary in the sorting/storage station. It will query the system database and allow a user access to the container where the waste are stored, label thewaste storage packaging with waste, weigh it and associate the user with the date thewaste storage packaging was deposited, location, type of waste claimed to be present in thewaste storage packaging, its weight and the unique code on the individual label applied to thewaste storage packaging. All mentioned data, together with the information regarding the degree of filling of the container with waste will be transmitted to the system server.

In the field of waste collection, labeling and monitoring, the technical solution according to the invention offers important advantages to both direct users and sanitation operators.

Thus, for direct users, through the dedicated software application or through the application for mobile phones the invention allows:
- defining an interactive map with the locations of the digitalized ecological waste collection islands;
- visualization of the degree of filling of the digitized ecological waste collection islands nearby;
- establishing a history with the types of deposited waste and the amounts;
- defining custom reports for the period and type of waste;
- real-time access to the types and quantities of deposited waste;
- receiving notifications from the sanitation operator.

For sanitation operators, through the dedicated software application the invention allows:
- increasing the degree of selective collection;
- digitization of the entire waste management process;
- cost efficiency;
- the efficiency of collection routes;
- collection of waste in intelligent modules that transmit information in real time;
- access to information about the type and quantities of waste deposited by each individual user;
- possibility to extract personalized reports for each collection module, each ecological island or group of ecological islands;
- general management of the quantities and types of waste collected;
- monitoring the condition of the digitized ecological island of waste collection;
- transmission in real time of the degree of filling of each collection mode within each digitized ecological waste collection island;
- providing information in real time about the existing amounts of waste in each module;
- alerting if a module approaches the set filling limit;
- finding out the amount of waste picked up by the sanitation operator's truck when the container is emptied.

In the field of product sorting and storage, the system streamlines the production process and the management of the resulting products. Thus, thanks to the individual labeling process, it is possible to identify both the source of the targeted product and the moment of its production.

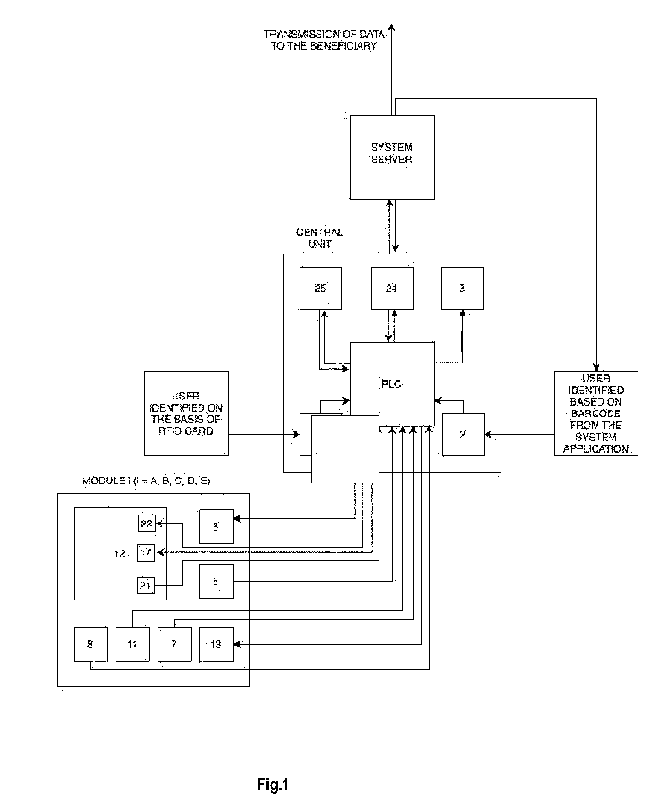

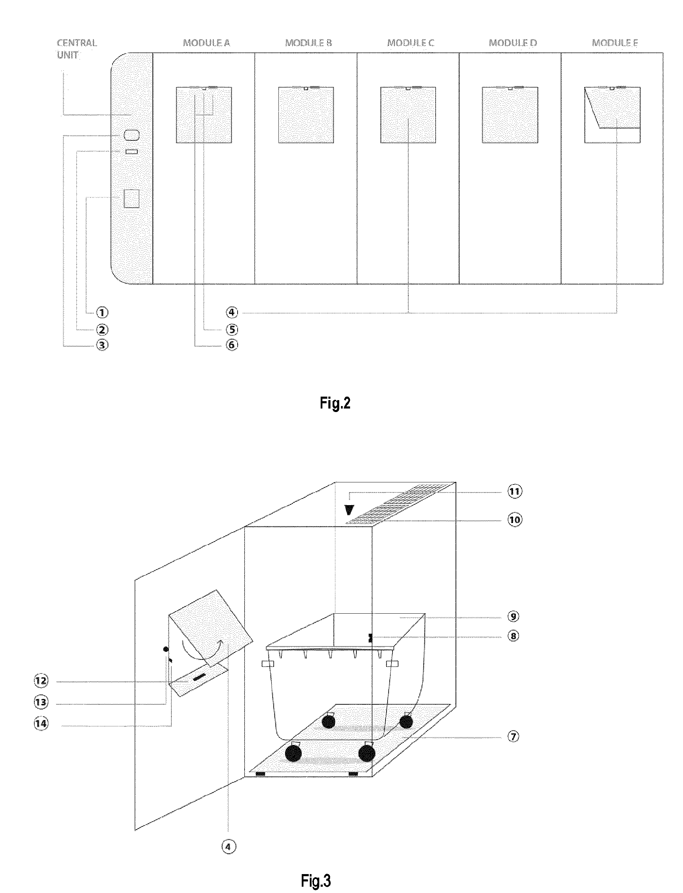

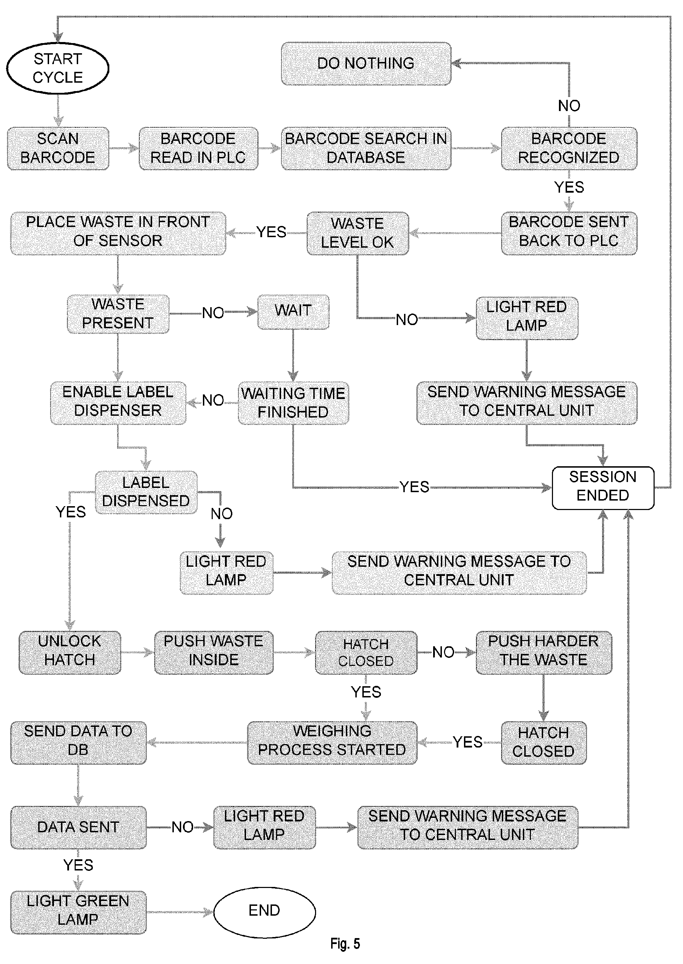

An embodiment of the invention is given next in connection with figures 1, 2, 3, 4, 5 which represent:
Fig.1 - Block diagram of the system;
Fig. 2 - System overview;
Fig. 3 - Overview of a module of the system;
Fig. 4 - Overview of the central unit and the label application device.
Fig. 5 - Functional flowchart of the system.

An embodiment of the system and the related method oriented on waste processing is given below. In the case of its use in the field of product sorting and storage, the system will be adapted to the technological flow owned by the user, keeping *mutatis mutandis* the method.

The claimed system consists of modules A, B, C, D, E for the collection of waste or, as the case may be, products, equipped with devices and elements suitable for access and proper handling of waste or products, including sensors generating signals that evaluate the fulfillment of the pre-set working conditions for waste collection, a central unit (UC) that receives, stores and manages all the received information and elaborates in real time the commands and work reports specific to the system, and respectively some label application devices (12) present in each module, that allow the application on the bag or the box with waste or products of pre-printed or printed labels at the time of using the system.

Thus, each of the collection modules A, B, C, D, E, etc. consists of a waste or product container (9) for depositingstorage packagings with waste or products, an access hatch (4) through which, after unlocking, is facilitated the access to the waste or product container inside the module for depositing the bag / box, some electromagnetic bolts (13) by acting on which it is unlocked the access hatch door (4) to the container inside the module, a weighing platform (7) of the container with waste or products, a label application device (12) and respectively some photovoltaic panels (10) intended for energy supply.

The collection module includes a series of specific signal sensors that indicate the progress of the collection and monitoring process, respectively a sensor for the presence of awaste storage packaging (5), placed frontally at the top of the access hatch, on each module (waste, carton, plastic, biodegradable, etc.) to detect the presence of thewaste storage packaging at the desired module, an access hatch door sensor (14), a sensor for measuring the degree of filling of the container inside the module (11), a module access door sensor (8) and, respectively, some lamps (6) for signalling system status, so that a green lamp signals a correct operating state, and a red lamp signals the non-functionality of the module due to the situation of a full container, or lack of labels, or failure.

The central unit (UC) is composed of a barcode reader (2) used for user identification, an RFID card reader (3) used for user identification, a PLC Programmable Logic Controller (PLC) which is a digital computer used to control the processes and the components of the system), a GSM data transmission module (24), an HMI operating panel (25), a printer for issuing proof of receipt of thewaste storage packaging (1) and respectively a general panel (23).

Energy security of the system is ensured by an uninterruptible UPS source so that in the event of a power failure, the safety and automatic protection of the system are ensured by an instantaneous supply of alternating electric current, for the purpose of powering the equipment (26) and some accumulators (27).for energy storage.

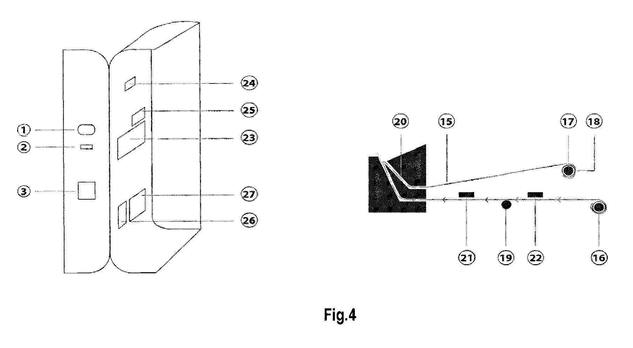

The label application device (12) is a mechanism by which the labels (pre-printed or printed at the time of using the system) located on the support tape are detached from the support tape and are applied to thewaste storage packaging with waste or products. The device is made up of a tape unwinding roll with labels (16), support tape for labels (15), label printer (22) (if necessary because the labels can be pre-printed), sensor for detecting the lack of labels (21), label rewinder (17), part for detaching labels from the tape (20), tape stretching roller (19) and tape wrapping roller without labels (18). Thus, at the command sent by the PLC, the label rewinder (17) will start, pulling the tape (15) until the label detection sensor (21) signals that the label has passed it, the length corresponding to the label located in the label release piece from the strip (20). The label located in the part for detaching labels from the tape (20) will detach in a proportion of 98%, from the support tape for labels (15) under the action of a sharp angle turn, according to Fig. 4. The label will be positioned in the way of thewaste storage packaging with waste or products, following that the support tape for labels (15) will continue to pass through the label detaching part from the tape (20) towards the tape stretching roller (19) and then it is wrapped on the tape wraping roller without labels (18).

After inserting thewaste storage packaging into the container, thewaste storage packaging presence sensor (5) located at the top of the access hatch (4) will detect its presence, and will send the command to the label dispenser (17) and thewaste storage packaging will apply the individual label provided by the label application device (12)

The labeledwaste storage packaging will fall into the container (9), container positioned on the weighing platform (7). The labeledwaste storage packaging will then be weighed and the data will be transmitted to the PLC and later to the system server.

The PLC can be controlled manually via the HMI. All data transmitted by the central unit and modules are transmitted to the PLC, which through the GSM data transmission module (24) will transmit them to the system server.

The system is supplied with electrical energy through the general panel, which is powered by connection to the electricity network or by means of photovoltaic panels (10) and energy storage batteries (27). The energy stability of the system is ensured by means of the UPS (26).

Operation of the system according to the invention is as follows.

The user has at his disposal the application/card that he shall scan next to the barcode reader (2) or the RFID card reader (1)

After scanning, the device will access the database on the server in real time to confirm the user's access to the waste container (9).

In the case of its confirmation, the user has at his disposal several modules A....E in which he can deposit thewaste storage packaging with waste/products. The modules are marked with the type of waste that can be deposited in the containers inside.

Depending on the type of waste that he has in thewaste storage packaging, the user will deposit it in the module where the container with that type of waste is located, the module being equipped with a sensor for the presence of thewaste storage packaging (5) sensor located on the front side from the top of the access hatch (4).

The user shall place the waste storage packaging/box in front of the waste storage packaging/box presence sensor (5) of the access hatch (4) and its door will unlock, allowing thewaste storage packaging to be inserted into the waste container (9), located inside the module, through the access hatch (4).

After inserting thewaste storage packaging, the access hatch door (4) of the module is blocked, thewaste storage packaging will be labelled with the label application device (12), it is weighted by using the weighing platform (7) and the user shall be associated with the data where thewaste storage packaging was deposited, location, type of waste claimed to be present in thewaste storage packaging, its weight and the unique code on the individual label applied to thewaste storage packaging. All the mentioned data, together with the information regarding the degree of filling of the waste container taken from the sensor measuring the degree of filling of the container (11) will be transmitted to the system server.

The RFID card reader (1) is used for reading RFID cards and identifying users.

The barcode reader (2) is used to read barcodes from the system application or from another medium.

Both readers communicate with the PLC, which in their turn accesses the database on the system server to identify the user and to check if access is allowed.

After identifying and obtaining access, the user will check the availability of the desired module, so if it is desired to deposit household waste, the user will move to the module with household waste.

In the upper central part of the access hatch (4) on the module, is positioned the system signaling lamp (6) The red colour of the lamp indicates that, the container inside the module is full and the waste storage packaging cannot be inserted. If the lamp colour is green, the system is functional and the waste storage packaging can be inserted.

In order to insert the waste storage packaging, it should be positioned in front of the access hatch (4). Thewaste storage packaging presence sensor (5) located at the top of the access hatch (4) will detect its presence, send the command to the label dispenser (17) to supply the label and unlock the electromagnetic bolts (13).

After unlocking them, the user will push the bag through the access hatch door (4) and it will fall into the container (9) located inside the module. During sliding towards the container, the individual label provided by the label application device (12) will be applied to the waste storage packaging

Immediately after inserting the bag, the access hatch door will return to the closed position, due to the hatch door sensor (14) which detecte its presence and will lock with the electromagnetic bolts (13).

The labeled bag will fall into the waste container (9), container positioned on the weighing platform (7). The labeled bag will be weighed and the data will be transmitted to the PLC and later to the system server.

The user may request a receipt in which the information regarding the user, the type of waste deposited, the quantity, the date and time of the deposit are entered. They will be printed by the printer (3) located in the central unit.

In addition to the total amount of waste in the container (9), the sanitation operator will have real-time access to information on the volume present in the container (9), the system being equipped with a sensor for measuring the degree of filling of the container inside the module (11) for these measurements. When emptying the container (9), the operator on the sanitation truck will open the access door of the module, this action being detected by the module access door sensor (8) and the data on the collected quantities will be transmitted to the PLC and later to the server the system.

In substance, the method of collection, labeling and monitoring of waste or products according to the invention involves:
- collecting information regarding the time and location of the deposit, the user, the type of waste and the amount deposited at the digitized ecological island;
- labeling of waste storage packaging (bag/box) with a unique code for each deposit, and if the labeling device is not functional (lack of paper, blockage, broken tape, etc.) the module for that type of waste is unavailable and cannot be used, and this situation is signaled by the coloured red light and the waste access hatch will not be opened;
- the association of the label code with the information regarding the time and location of the deposit, the user, the type of waste and the amount deposited;
- transmission of information to the IT platform of the system and to the user.
based on which the system allows:
- preparing reports on the type of waste and the amount of waste deposited over a specified period for each user;
- ensuring the traceability of deposited waste;
- monitoring the functioning parameters of digitalized ecological islands;
- optimizing the collection routes of sanitation operators' vehicles.

## Claims

1. Intelligent system for the collection, labeling and monitoring of waste or products that comprises some modules A, B, C, D, E for waste collection or, as the case may be, for products, each module consisting of a container (9) for depositingwaste storage packagings with waste or products, an access hatch (4) through which, after unlocking, access to the container inside the module for depositing thewaste storage packaging is facilitated, some electromagnetic bolts (13) by which the door of the access hatch to the container inside the module shall be unlocked, a weighing platform (7) of the container (9) and respectively some photovoltaic panels (10), each collection module having in its structure a series of sensors of specific signals that indicate the progress of the collection process and monitoring, respectively a sensor for the presence of awaste storage packaging (5), placed on each module frontally at the top of the access hatch, for detecting the presence of thewaste storage packaging at the desired module, an access hatch door sensor (14), a sensor for measuring the degree of filling of the container inside the module (11), a module access door sensor (8), and respectively some system status signaling lamps (6) **characterized in that** a central unit (UC), having as components a barcodes reader (2) and an RFID card reader (3) which communicate with a programmable logic controller (PLC) that interrogates the data base of the system in order to identify the user and to check the allowance of its access, a GSM data transmission module (24), an HMI operation panel (25 ), a printer for issuing the proof of receipt of thewaste storage packaging (1) and respectively a general panel (23), is intended for receiving, memorizing and managing all the information received and elaborates in real time the orders and work reports specific to ensuring the functionality of the system, which includes elaborating the command to, and processing the data from a label application device (12), also located in the system structure and located inside each module, which allows the application directly during the ongoing process, on the bag or box with waste or products of pre-printed or printed labels at the time of using the system.

2. System according to claim 1, **characterized in that** the label application device (12) is made up of a label tape unfolding roll (16), a label support tape (15), a label printer (22), a sensor for lack of labels detection (21), a label dispenser (17), a part for detaching labels from the tape (20), a tape stretching roller (19) and respectively a tape wrapping roller without labels (18), so that the order sent by the PLC, the label dispenser (17) pulls the tape (15) until the label detection sensor (21) signals that the label has passed by it on a corresponding length of the label located in the label detaching part from the tape (20), moment in which the label detaches in a proportion of 98% from the label support tape (15) under the action of a sharp angle turn and positions itself in the path of thewaste storage packaging with waste or products, following which the label support tape (15) passes then through the part for detaching labels from the tape (20) to the tape stretching roller (19) and later to wrap on the tape wrapping roller without labels (18).

3. Method for collection, labeling and monitoring of waste or products, implemented on the system from claim 1, **characterized in that** starting from the initial conditions given by the information on the users authorized by the system and respectively on the degree of filling of the waste container taken from the sensor measuring the degree of filling of the container (11), suposes processing the following steps:
- the user scans the barcode reader (2) or the RFID card reader (1) in order to receive confirmation of access to the waste container (9);
- after identifying and obtaining access, the user will check the availability of the desired module, so thet if household waste is desired, the user will move to the module with household waste and depending on the color of the system signal lamp (6) the status of the container inside the module is determined so that either it is full and the waste storage packaging cannot be inserted, or that the system is functional and the waste storage packaging can be inserted, subject to the conditions that if the color of the system signal lamp (6) is green, it will be possible to insert thewaste storage packaging with waste into the container (9), if the color of the signal lamp (6) is red, the module cannot be used because the container (9) is full or one of the components of the module is non-functional and it is recommended to use another module intended for that type of waste;
- - depending on the type of waste contained in thewaste storage packaging, the user will deposit it in the module where the container with that type of waste is located, the module being equipped with a sensor for the presence of thewaste storage packaging (5) sensor placed frontally at the top of the access hatch (4);
- information is collected regarding the time and location of the deposit, the user, the type of waste and the amount deposited at the digitized ecological island;
- the waste storage packaging (bag/box) is labeled with a unique code for each deposit, and if the labeling device is not functional by lacking of paper, blockage, broken tape, or other similar events, the module for that type of waste will be unavailable and cannot be used, this situation being signaled by a red coloured light and the waste access hatch will not be opened;
- - it is performed its weighing, by using dedicated platform (7) and the user will be associated with the date thewaste storage packaging was deposited, location, type of waste claimed to be present in thewaste storage packaging, its weight and the unique code on the individual label applied to thewaste storage packaging;
- the label code shall be associated with the information regarding the time and location of the deposit, the user, the type of waste and the amount deposited;
- relevant information shall be transmitted to the IT system platform and to the user, based on which the system allows: the preparation of reports on the type of waste and the amount of waste deposited over a specified period for each user, ensuring traceability of the deposited waste, monitoring the operating parameters of the ecological islands digitized, optimizing the collection routes of sanitation operators' vehicles.

## Amended claims

### Amended claims in accordance with Rule 137(2) EPC.

1. Intelligent system for the collection, labeling and monitoring of waste or products that comprises some modules A, B, C, D, E for waste collection or, as the case may be, for products, each module consisting of a container (9) for depositingwaste storage packagings with waste or products, an access hatch (4) through which, after unlocking, access to the container inside the module for depositing the waste storage packaging is facilitated, some electromagnetic bolts (13) by which the door of the access hatch to the container inside the module shall be unlocked, a weighing platform (7) of the container (9) and respectively some photovoltaic panels (10), each collection module having in its structure a series of sensors of specific signals that indicate the progress of the collection process and monitoring, respectively a sensor for the presence of awaste storage packaging (5), placed on each module frontally at the top of the access hatch, for detecting the presence of the waste storage packaging at the desired module, an access hatch door sensor (14), a sensor for measuring the degree of filling of the container inside the module (11), a module access door sensor (8), and respectively some system status signaling lamps (6), a central unit (UC), having as components a barcodes reader (2) and an RFID card reader (3) which communicate with a programmable logic controller (PLC) that interrogates the data base of the system in order to identify the user and to check the allowance of its access, a GSM data transmission module (24), an HMI operation panel (25 ), a printer for issuing the proof of receipt of the waste storage packaging (1) and respectively a general panel (23), **characterised in that** is configured to achieve waste packaging in individual bags and through the functionality of a label application device (12), located inside each module, which allows the label application directly during the ongoing process, on the bag or box with waste or products of pre-printed or printed labels at the time of using the system, the bags are individually weighed and labeled when placed in the container and once the user is associated with the waste bag and with the content and weight of the inserted waste bag, the intelligent system ensures the traceablity of the processed waste and generation and managing of processed information by performing the following actions:
- after identifying and obtaining access, the user checks the availability of the desired module;
- - depending on the type of waste contained in the waste storage packaging, the user will deposit it in the module where the container with that type of waste is located;
- information is collected regarding the time and location of the deposit, the user, the type of waste, the unique code of the label applied on the waste storage packaging and the amount deposited at the specific area of smart waste solution;
- the waste storage packaging (bag/box) is labeled with a unique code for each deposit;
- - it is performed its individual weighing, by using dedicated platform (7) ;
- the user will be associated with the date the waste storage packaging was deposited, location, type of waste claimed to be present in the waste storage packaging, its weight and the unique code on the individual label applied to the waste storage packaging;
- the label code shall be associated with the information regarding the time and location of the deposit, the user, the type of waste and the amount deposited;
- relevant information is used for the preparation of reports on the type of waste and the amount of waste deposited over a specified period for each user, ensuring traceability of the deposited waste, monitoring the operating parameters of the digitized specific area of smart waste solution, optimizing the collection routes of sanitation operators' vehicles.

2. System according to claim 1, **characterized in that** the label application device (12), is configured by a specific geometry of the angles of access hatch of waste bags (4), as well as the angle in which the label is detached and positioned from the piece for detaching labels and the support for the labels partially detached enters and respectively leaves the device to enable the labels to be detached from their support roll and stuck on the waste bags automatically, and is made up of a label tape unfolding roll (16), a label support tape (15), a label printer (22), a sensor for lack of labels detection (21), a label dispenser (17), a part for detaching labels from the tape (20), a tape stretching roller (19) and respectively a tape wrapping roller without labels (18), so that the order sent by the PLC, the label dispenser (17) pulls the tape (15) until the label detection sensor (21) signals that the label has passed by it on a corresponding length of the label located in the label detaching part from the tape (20), moment in which the label detaches in a proportion of 98% from the label support tape (15) under the action of a sharp angle turn and positions itself in the path of the waste storage packaging with waste or products, following which the label support tape (15) passes then through the part for detaching labels from the tape (20) to the tape stretching roller (19) and later to wrap on the tape wrapping roller without labels (18),
